# EUROPEAN PATENT SPECIFICATION

(11) **EP 0 790 914 B1**
(45) Date of publication and mention of the grant of the patent: **01.07.1998**
(21) Application number: 95936674.1
(22) Date of filing: 13.11.1995
(51) Int. Cl.: B62D 1/18

(54) **ADJUSTABLE STEERING COLUMN**
VERSTELLBARE LENKSÄULE
COLONNE DE DIRECTION REGLABLE

(30) Priority: 17.11.1994 GB 9423187
(43) Date of publication of application: 27.08.1997
(73) Proprietor: THE TORRINGTON COMPANY LIMITED, Coventry Warwickshire CV4 9AE (GB)
(72) Inventor: BARTON, Laurence, George, Herbert, Warwickshire CV32 5XA (GB)
(74) Representative: Feakins, Graham Allan
(86) International application number: GB9502658
(87) International publication number: WO9615931

(56) References cited:
- EP-A- 0 564 898
- EP-A- 0 600 700
- GB-A- 2 107 439
- GB-A- 2 113 629
- GB-A- 2 279 728

## Description

This invention relates to an antifriction device for use between relatively sliding components in a clamping mechanism of an adjustable steering column construction for a vehicle.

It is known from our PCT Application No. WO-A-9501901 (published on 19.01.95) to provide a clamping mechanism with an antifriction element which allows for a dual purpose slotted liner which allows low friction plastics contact for adjustment and high friction metal contact for positive locking of the mechanism. This improves the "feel" to the user.

According to one aspect of the present invention, there is provided an antifriction device for use between relatively sliding components in a clamping mechanism of an adjustable steering column construction for a vehicle the device being locatable between two said components, characterised in that the device includes a slotted liner with two resilient flanges, one on each opposing side of a surface of the liner on which one of said components is intended to slide, the flanges extending in the free state of the liner at an angle to said surface of said liner, so that, in an unclamped state of the components, said flanges act to urge the components away from contact with one another to allow relative free sliding of the components on the element and, in a clamped state of the components, said flanges are deflected to allow direct contact between surfaces of the components to provide the clamping friction, and the antifriction device allows sliding between limiting stops; and a resilient means is provided between said stops.

The resilient means may be either a separate member inserted into a slot in the liner or else resilient ends to a slot in the liner. The resilient ends may be formed as resilient inserts at the slot ends.

The provision of the resilient means enables a steering column to be adjusted so that as it reaches the limiting stops of its adjustment it is stopped softly.

According to another aspect of the invention there is provided a steering column comprising a first clamp member, a second clamp member slidable relative to the first clamp member, the first clamp member and second clamp member being in contact with one another when the steering column is in a clamped state; and an antifriction device as defined hereinbefore interposed between the first clamp member and the second clamp member.

For a better understanding of the invention and to show how the same may be carried out to effect, reference will now be made, by way of example, to the accompanying drawings, in which:-
Fig. 1 is a perspective view of an antifriction device according to the invention for use between relatively sliding components of an adjustable steering column construction for a vehicle,
Fig. 2 is a cross section of the antifriction device of Fig. 1 located diagrammatically between two such sliding components in an unclamped position,
Fig. 3 in similar cross section to Fig. 2 but showing the clamped condition,
Fig. 4 is a side view, partly in section, which shows an adjustable steering column construction incorporating two of the antifriction devices of Fig. 1, one for linear adjustment of the column and the other for vertical adjustment of the column,

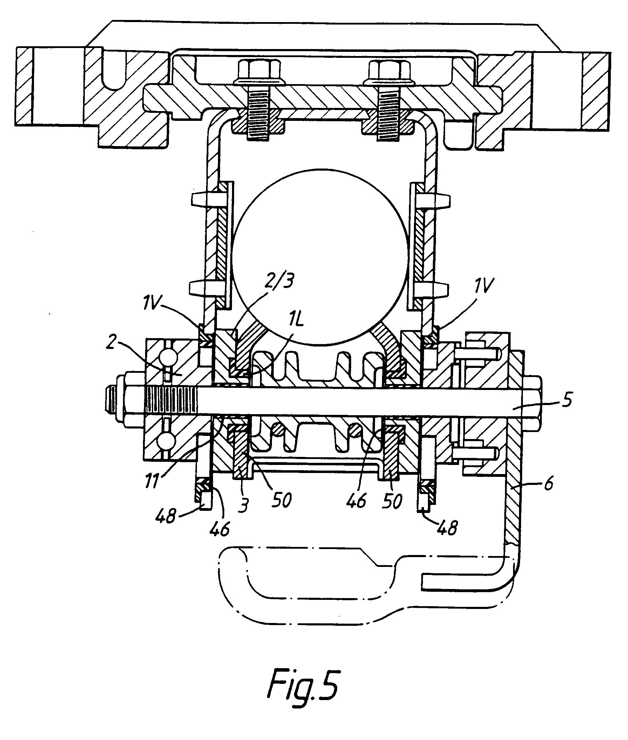

Fig. 5 is an end view in section of the construction of Fig. 4 using the antifriction device of Fig. 1,
Fig. 6 is an exploded perspective view of a construction similar to that of Fig. 4 using the antifriction device of Fig. 1,
Fig. 7 is an exploded perspective view similar to Fig. 6 but with an antifriction device according to a second embodiment of the invention,
Fig. 8 is a perspective view of a vertical antifriction device according to the first embodiment of the invention shown in Fig. 1 and used in the Fig. 6 construction,
Fig. 9 is a perspective view of a linear antifriction device according to the first embodiment of the invention shown in Fig. 1 and used in the Fig. 6 construction.
Fig. 10 is a perspective view of one of the antifriction elements antifriction devices according to the second embodiment used in the construction of Fig. 7,
Figs. 11 and 12 are perspective views of vertical and linear antifriction devices according to a third embodiment of the invention similar to those shown in Figs. 8 and 9 for the construction of Fig. 6,
Fig. 13 is a cross section taken on W of Fig. 12, and
Fig. 14 is a cross section taken on YY of Fig. 12.

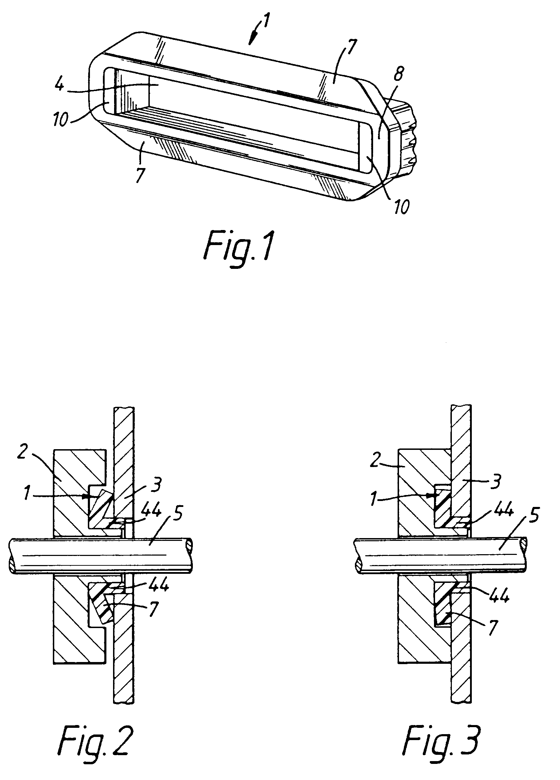

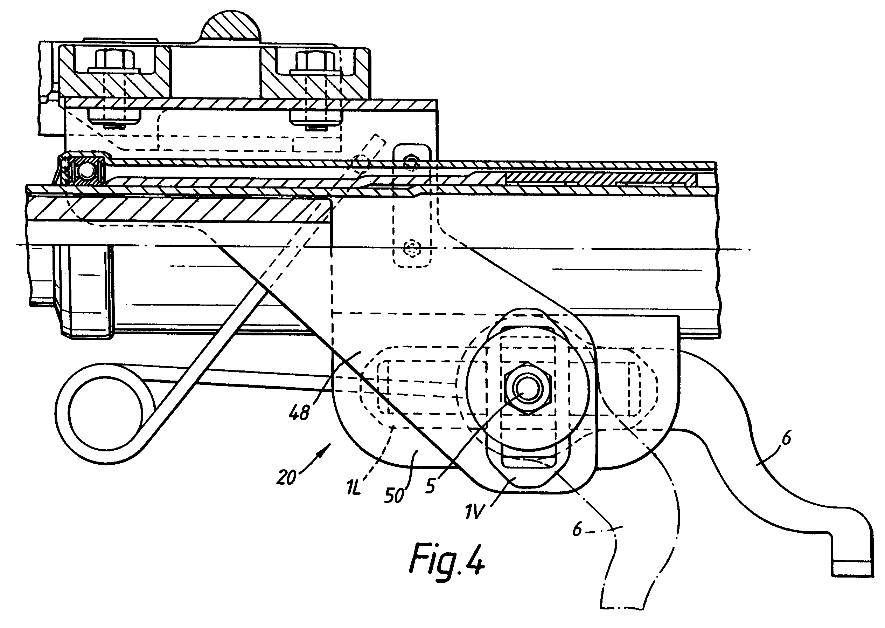

In Fig. 1 there is shown diagrammatically an antifriction element in the form of a slotted flanged plastics liner 1 for interposition between two relatively sliding components 2,3 respectively of an adjustable steering column construction 20, as shown in Fig. 4

The liner 1 has a longitudinal slot 4 providing limiting stops through which an adjustment bar 5 of an adjustment mechanism extends. The adjustment mechanism includes a clamp handle 6 which when moved to the broken line position of Fig. 4 tightens part 2 and 3 together. The liner 1 has two opposing flanges 7 extending in the liners unclamped state (Fig. 2) at an angle from the plane of a surface 8 of the liner. When the adjustment mechanism is tightened by the clamp handle to the position shown in Fig. 3 the liner assists to increase the clamping action. Liner's 1 are normally provided in pairs that is a vertical liner 1V and a linear liner 1L (see Fig. 4). All this is as described in our PCT Application WO-A-9501901 hereafter referred to as "PCT application".

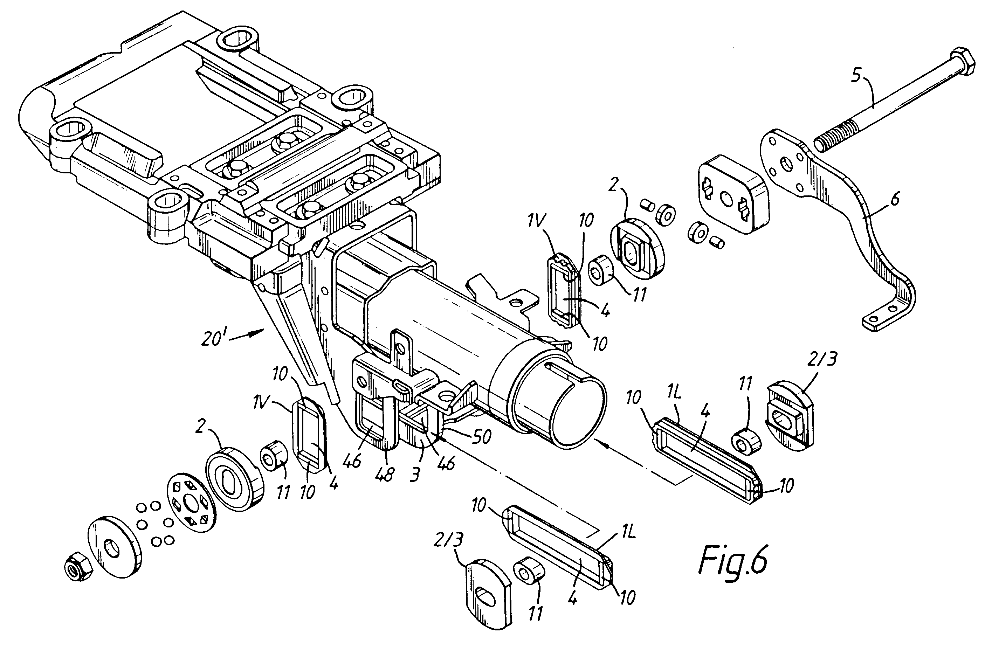

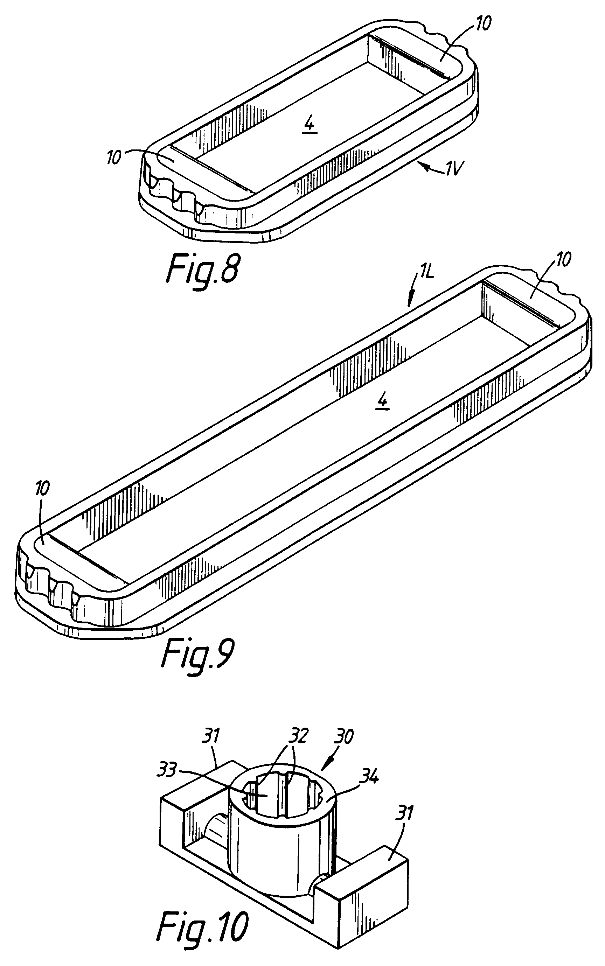

A first improvement over the liners of the PCT application is to provide a soft resilient block 10 of an elastomeric material either plastics or rubber at each end of slot 4. This is shown in detail in Fig. 8 which is a vertical liner 1V and Fig. 9 which in a linear liner 1L. The provision of blocks 10 cushions the impact of bolt 5 on the liner as the column stops at the end of the vertical and/or linear throw. In Fig. 6 which incorporates the liners of Figs. 8 and 9 rubber sleeves 11 are provided to fit around bolt 5 and to slide in the liner slots 4.

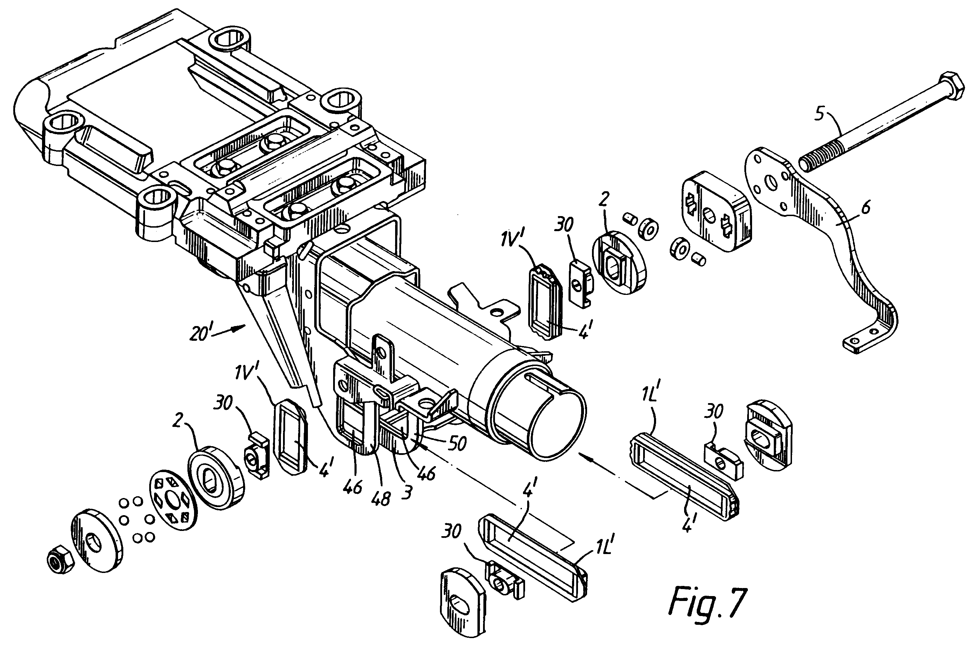

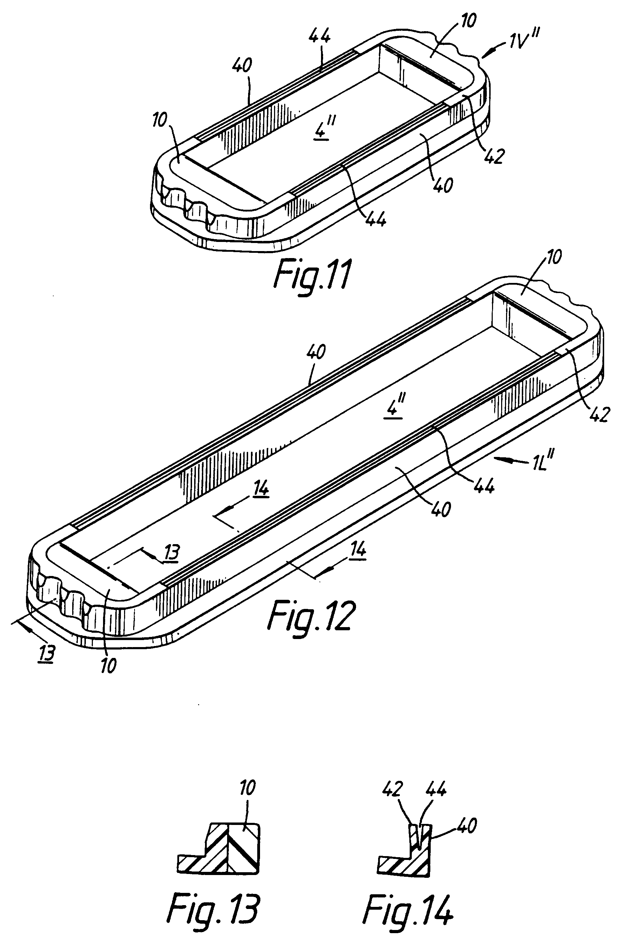

A second embodiment is to provide cushioning by means of an antifriction element formed as a stop member. This is shown in Fig. 10 at 30 and in Fig. 7 where there are four such stop members which fit into and slit within slots 4 in antifriction elements 1V' and 1L' which are similar to those shown in Figs. 8 & 9 but without cushioning blocks 10. The cushioning between the stop numbers and the antifriction elements is by means of the stop members 30 being formed as rubber moulded parts wither solid rubber or rubber moulded over a metal form so that the ends 31 of the stop members have buffer portions 31. Also the stop members have internal ribs 32 within a hole 33 in a central boss 34 through which bolt 5 passes. The internal ribs act to prevent rattle. These are seen in Fig. 10.

A third improvement may be seen in vertical and linear antifriction elements 1V'' and 1L'' shown in Figs. 11 to 14.

In the liner elements shown in Figs. 11 to 14 longitudinal walls 40 either side of longitudinal slots 4'' have their surfaces 42 provided with a slit 44 extending along most of the length of the slots 4''. Fig. 14 shows the slit 44 open and in the uncompressed state before fitting into retaining slots 46 in clamping mechanism brackets 48 and 50 of either mechanism shown in Fig. 6 or Fig. 7. Fig. 3 shows the slit 44 closed under compression so that any rattle due to manufacturing tolerances is avoided. The slit 44 can be provided advantageously in a liner like those shown in Figs. 8 & 9 having resilient cushion inserts 10 or in liners without inserts 10 as shown in Fig. 7 which are cushioned by stop members 30.

## Claims

1. An antifriction device (1) for use between relatively sliding components (2, 3) in a clamping mechanism of an adjustable steering column construction (20) for a vehicle the device being locatable between two said components (2, 3), characterised in that the device includes a slotted liner (1) with two resilient flanges (7), one on each opposing side of a surface (8) of the liner on which one of said components (2, 3) is intended to slide, the flanges extending in the free state of the liner at an angle to said surface of said liner, so that, in an unclamped state of the components, said flanges (7) act to urge the components away from contact with one another to allow relative free sliding of the components on the element and, in a clamped state of the components, said flanges are deflected to allow direct contact between surfaces of the components to provide the clamping friction, and the antifriction device allows sliding between limiting stops; and a resilient means (10, 30) is provided between said stops.

2. An antifriction device as claimed in claim 1, wherein the limiting stops are provided by the ends of the slot (4) in the liner (1).

3. An antifriction device as claimed in claim 2, wherein the resilient means is a separate member (30) inserted in said slot (4).

4. An antifriction device as claimed in claim 3, wherein the resilient means is formed with a central portion having a hole therethrough, the hole defined by a ribbed surface and so arranged to receive a clamping bar of the mechanism, resilient portions extending outwardly from the central portion, each resilient portion being arranged to buffer against a respective one of the limiting stops of the slot in the liner.

5. An antifriction device as claimed in claim 2, wherein the resilient means comprises resilient portions (10) at the ends of the slot (4).

6. An antifriction device as claimed in any one of claims 2 to 5, wherein the slot is defined on each longitudinal side by a wall (40) extending to a surface provided with a slit (44) extending at least most of the length of the slot.

7. A steering column comprising a first clamp member (2), a second clamp member (3) slidable relative to the first clamp member, the first clamp member and second clamp member being in contact with one another when the steering column is in a clamped state; and an antifriction device (1) as claimed in any one of claims 1 to 6 interposed between the first clamp member (2) and the second clamp member (3).

## Patentansprüche

1. Reibungsarme Vorrichtung (1) zur Verwendung zwischen relativ zueinander gleitenden Komponenten (2, 3) in einem Klemm-Mechanismus einer verstellbaren Lenksäulenkonstruktion (20) für ein Fahrzeug, wobei die Vorrichtung zwischen zwei solchen Komponenten (2, 3) anzuordnen ist, **dadurch gekennzeichnet,** daß die Vorrichtung eine geschlitzte Auskleidung (1) mit zwei nachgiebigen Flanschen (7) aufweist, einen an jeder gegenüberliegenden Seite einer Oberfläche (8) der Auskleidung, an welcher eine der genannten Komponenten (2, 3) gleiten soll, wobei die Flansche sich in dem freien Zustand der Auskleidung unter einem Winkel gegenüber der Oberfläche der Auskleidung erstrecken, so daß in einem nicht geklemmten Zustand der Komponenten die Flansche (7) so wirken, daß sie die Komponenten von einer Berührung miteinander wegdrücken, um ein relativ freies Gleiten der Komponenten an dem Element zu gestatten, und in einem geklemmten Zustand der Komponenten die Flansche verformt sind, um eine direkte Berührung zwischen Oberflächen der Komponenten zu gestatten, um die Klemmreibung zu liefern, wobei die reibungsarme Vorrichtung ein Gleiten zwischen begrenzenden Anschlägen gestattet und wobei eine nachgiebige Einrichtung (10, 30) zwischen den Anschlägen vorgesehen ist.

2. Reibungsarme Vorrichtung nach Anspruch 1, bei der die begrenzenden Anschläge durch die Enden des Schlitzes (4) in der Auskleidung (1) gebildet sind.

3. Reibungsarme Vorrichtung nach Anspruch 2, bei der die nachgiebige Einrichtung ein separates Glied (30) ist, das in den Schlitz (4) eingesetzt ist.

4. Reibungsarme Vorrichtung nach Anspruch 3, bei der die nachgiebige Einrichtung mit einem zentralen Abschnitt gebildet ist, der ein Durchgangsloch hat, wobei das Loch durch eine gerippte Oberfläche gebildet und so angeordnet ist, daß es eine Klemmstange des Mechanismus aufnimmt, wobei sich nachgiebige Abschnitte nach außen von dem zentralen Abschnitt erstrecken, wobei jeder nachgiebige Abschnitt so angeordnet ist, daß er gegen einen entsprechenden der begrenzenden Anschläge des Schlitzes in der Auskleidung puffert.

5. Reibungsarme Vorrichtung nach Anspruch 2, bei der die nachgiebige Einrichtung nachgiebige Abschnitte (10) an den Enden des Schlitzes (4) aufweist.

6. Reibungsarme Vorrichtung nach einem der Ansprüche 2 bis 5, bei der der Schlitz an jeder Längsseite durch eine Wand (40) gebildet ist, die sich zu einer Oberfläche erstreckt, die mit einer Rille (44) versehen ist, die sich wenigstens über den größten Teil der Länge des Schlitzes erstreckt.

7. Lenksäule mit einem ersten Klemmglied (2) und einem zweiten Klemmglied (3), das relativ zu dem ersten Klemmglied gleitfähig ist, wobei das erste Klemmglied und das zweite Klemmglied miteinander in Berührung sind, wenn die Lenksäule sich in einem geklemmten Zustand befindet, und mit einer reibungsarmen Vorrichtung (1), wie in irgendeinem der Ansprüche 1 bis 6 beansprucht, die zwischen dem ersten Klemmglied (2) und dem zweiten Klemmglied (3) angeordnet ist.

## Revendications

1. Dispositif antifriction (1) destiné à être utilisé entre des éléments (2, 3) qui coulissent l'un par rapport à l'autre dans un mécanisme de serrage d'une construction (20) de colonne de direction réglable destinée à un véhicule, le dispositif pouvant être positionné entre des éléments (2, 3), caractérisé en ce que le dispositif comporte un fourreau (1) ayant une fente et possédant deux flasques élastiques (7), un de chaque côté d'une surface (8) du fourreau sur laquelle est destiné à glisser l'un des éléments (2, 3), les flasques, à l'état libre du fourreau, s'étendant suivant un angle par rapport à la surface du fourreau si bien que, à l'état non serré des éléments, les flasques (7) écartent les éléments de leur position de contact mutuel pour permettre un glissement relatif libre des éléments sur l'organe et, à l'état serré des éléments, les flasques sont déviés afin qu'ils permettent un contact direct entre les surfaces des éléments pour assurer un frottement de serrage, et le dispositif antifriction permet un glissement entre des organes d'arrêt de limite, et un dispositif élastique (10, 30) est placé entre les organes d'arrêt.

2. Dispositif antifriction selon la revendication 1, dans lequel les organes d'arrêt de limite sont formés par les extrémités de la fente (4) du fourreau (1).

3. Dispositif antifriction selon la revendication 2, dans lequel le dispositif élastique est un organe séparé (30) inséré dans la fente (4).

4. Dispositif antifriction selon la revendication 3, dans lequel le dispositif élastique a une partie centrale ayant un trou qui la traverse, le trou étant délimité par une surface à nervure et étant disposé afin qu'il loge une barre de serrage du mécanisme, des parties élastiques s'étendant vers l'extérieur de la partie centrale, chaque partie élastique étant disposée afin qu'elle exerce un amortissement contre un organe respectif d'arrêt de limite de la fente formée dans le fourreau.

5. Dispositif antifriction selon la revendication 2, dans lequel le dispositif élastique comprend des parties élastiques (10) placées aux extrémités de la fente (4).

6. Dispositif antifriction selon l'une quelconque des revendications 2 à 5, dans lequel la lente est délimitée de chaque côté longitudinal par une paroi (40) s'étendant vers une surface qui possède une fente mince (44) s'étendant au moins sur la plus grande partie de la longueur de la lente.

7. Colonne de direction comprenant un premier organe de serrage (2), un second organe de serrage (3) qui peut coulisser par rapport au premier organe de serrage, le premier organe de serrage et le second organe de serrage étant en contact mutuel lorsque la colonne de direction est à l'état serré, et un dispositif antifriction (1) selon l'une quelconque des revendications 1 à 6, disposé entre le premier organe de serrage (2) et le second organe de serrage (3).
